# EUROPÄISCHE PATENTSCHRIFT

(11) **EP 1 439 139 B1**
(45) Veröffentlichungstag und Bekanntmachung des Hinweises auf die Patenterteilung: **29.11.2006**
(21) Anmeldenummer: 04000593.6
(22) Anmeldetag: 14.01.2004
(51) Int. Cl.: B65G 27/30, B65G 27/20, B65G 27/32

(54) **Verfahren und Vorrichtung zur Einstellung der Schüttgutmenge auf einer Förderrinne einer Schwingmaschine**
Method and device to control the amount of bulk material fed by a vibrating conveyor
Méthode et dispositif pour règler la quantité de matériau en vrac alimentée par une goulotte vibrante

(30) Priorität: 14.01.2003 DE 10301143
(43) Veröffentlichungstag der Anmeldung: 21.07.2004
(73) Patentinhaber: Schenck Process GmbH, 64293 Darmstadt (DE)
(72) Erfinder: Sättler, Heinz, 67229 Gerolsheim (DE); Sattler, Matthias, 64625 Bensheim (DE); Simon, Ralf, 64846 Gross-Zimmern (DE)
(74) Vertreter: Behrens, Helmut

(56) Entgegenhaltungen:
- EP-A- 1 188 695
- DE-A- 3 607 189
- DE-U- 9 117 079
- GB-A- 1 536 765
- US-A- 5 979 640
- US-A- 6 024 210

## Beschreibung

Die Erfindung betrifft ein Verfahren zur Einstellung der Schüttgutmenge auf einer Schwingmaschine gemäß dem Oberbegriff des Patentanspruchs 1 sowie eine Vorrichtung zur Durchführung des Verfahrens gemäß dem Oberbegriff des Patentanspruchs 4.

Beim Fördern oder Behandeln von Schüttgütern auf Schwingmaschinen ist es häufig erforderlich, eine bestimmte Schüttgutmenge bzw. eine vorgegebene Schüttguthöhe auf der Förderrinne einzuhalten. Derartige Schwingmaschinen haben sich insbesondere für Entwässerungsaufgaben bewährt, wobei diese als Siebmaschinen ausgebildet sind und ein Trennen der Flüssigkeit von den Feststoffen auf kleinstem Raum und bei kürzesten Entwässerungszeiten ermöglichen. Um ein möglichst wasserarmes Endprodukt zu erhalten, kommt es in der Hauptsache darauf an, einen zusammenhängenden Feststoffkuchen mit definierter Schütthöhe herbeizuführen. Dadurch sind auf einer Schwingmaschine Restfeuchtewerte von 10 bis 20 % erreichbar. Denn durch die Schwingbewegung wird durch Bewegen einzelner Feststoffanteile gegeneinander ein Verdichten des Feststoffkuchens bewirkt, so daß die Flüssigkeit nach allen Seiten verdrängt wird und abfließt. Dazu haben sich Linearschwingmaschinen mit leicht ansteigenden Siebflächen bewährt, bei denen das Wasser durch den Entwässerungs-Siebbelag als auch nach hinten abgeführt wird. Beim Einsatz von Linearschwingern ist der Einfluß von Frequenz und Schwingweite bedeutungsvoll. Bei der Entwässerung von Sand und Kies wurden deshalb Linearschwingsiebrinnen eingesetzt, deren Wurfwinkel, Schwingweite, Schwingungszahl und Schwingneigung des Siebes so gewählt werden, daß in Abstimmung mit der Breite und der Aufgabeleistung möglichst eine konstante und definierte Schütthöhe einhaltbar ist.

Es ist bekannt, bei unterschiedlichen Aufgabenmengen die Schütthöhe durch eine Regelung der Schwingungszahl konstant zu halten. Dazu wird durch einen Beladungsaufnehmer die Schüttguthöhe auf der Förderrinne erfaßt und bei einer Abweichung von dieser Sollschüttguthöhe die Drehzahl der Schwingungserreger so verändert, daß sich die Sollhöhe wieder einstellt. Dabei ist es aber nicht immer vermeidbar, daß die Schwingmaschine zeitweise in Resonanzbereichen betrieben wird, was dann leicht zu Beschädigungen empfindlicher Maschinenteile führt. Zudem kann sich die Frequenzänderung auf den Entwässerungsgrad ungünstig auswirken, wodurch eine vorgesehene minimale Restfeuchte nicht immer einhaltbar ist.

Es ist zwar denkbar, die Restfeuchte dadurch zu optimieren, daß die Schüttguthöhe bzw. Schüttgutmenge durch Veränderung der Sieb- bzw. Förderrinnenneigung konstant gehalten wird. Hierdurch müßte die Neigung der Sieb- bzw. Förderrinne während des Betriebs kontinuierlich veränderbar sein, was einen hohen konstruktiven Aufwand an der Schwingmaschine erfordert.

Die Fördergeschwindigkeit und damit die Schüttguthöhe auf einer Schwingmaschine könnte auch durch eine Veränderung der Schwingamplitude beeinflußt werden. Aus der DE 40 00 011 C2 ist eine Vorrichtung zur Schwingungserregung bekannt, mit der eine kontinuierliche Einstellung der Schwingungsamplitude durchführbar ist. Dazu sind mindestens zwei Paare gegenläufig synchron umlaufbarer Unwuchtkörper vorgesehen, deren Resultierende in einer Richtung verläuft. Zur Einstellung der Amplitude werden die beiden Unwuchtkörper des ersten und des zweiten Paares in ihrer relativen Winkellage gegeneinander so verstellt, daß sich ihre Unwuchtwirkungen entweder kontinuierlich ergänzen oder aufheben. Zur Verstellung ist dabei ein aufwendiger Stellmotor mit Getriebe erforderlich, der mit beiden Unwuchtkörperpaaren gekoppelt ist. Diese Vorrichtung ist vorzugsweise zur Einstellung der Schwingungsamplitude bei Vibratoren für Rammarbeiten vorgesehen, die nicht ohne weiteres bei Schwingmaschinen mit einer Förderrinne einsetzbar ist und insbesondere eine aufwendige konstruktive Ausgestaltung.erfordert.

Die Schüttgutmenge auf einer Förderrinne könnte auch durch eine Regelung der Schwingfrequenz und der Amplitude konstant gehalten werden. Aus der DE 41 16 647 C1 ist eine Rüttelvorrichtung zum Verdichten von herzustellenden Betonelementen bekannt, bei der an einem Rütteltisch vier Unwuchterreger angeordnet sind. Die Unwuchterreger sind einander paarweise zugeordnet. Über einen elektronischen Regler ist die Rüttelfrequenz und die Rüttelkraft der Unwuchterreger veränderbar. Über den Regler ist jeder Unwuchterregerantrieb winkelsynchron so regelbar, daß zur Änderung der Rüttelfrequenz die Drehzahl der Unwuchterreger verändert werden. Darüber hinaus wird zur Änderung der Rüttelkraft die Winkellage der Unwuchterreger zueinander durch die Drehzahl der einen der beiden einander zugeordneten Unwuchterreger kurzzeitig verändert. Durch die Veränderung der Erregerdrehzahl ist eine Veränderung der Rüttelfrequenz erreichbar und durch die Phasenverstellung der Unwuchterreger ist eine Veränderung der Rüttelkraft von 0 bis zu einem Maximum einstellbar. Da bei dieser Rüttelvorrichtung sowohl die Regelung der Rüttelfrequenz als auch die Änderung der Winkellagen der Unwuchtwellen vorgesehen ist, wodurch bei einer Siebmaschine das Problem von Resonanzeffekten auftreten kann, ist hiermit eine Regelung der Schüttguthöhe bzw. Schüttgutmenge nur ungenau möglich. Im übrigen erfordert ein derartig regelbarer Unwuchterreger mindestens vier Unwuchtwellen mit vier Unwuchtantriebsmotoren, dessen hoher Aufwand bei der Behandlung von Schüttgütern auf Schwingmaschinen häufig nicht vertretbar ist.

Aus der US 6,024,210 ist ein Kontrollsystem für Schwingförderer bekannt, bei dem die Installation ,mehrerer Vibrations-Module möglich ist. Hierbei umfasst jedes Modul einen Motor und eine oder mehrere Unwuchtwellen. Eine Welle ist dabei als master-shaft vorgesehen, welche kontinuierlich mit einer vorbestimmten Geschwindigkeit betrieben wird.

Die US 6,024,210 sieht einen Abgleich der Schwingwerte der Unwuchtwellen an einen vorgegebenen Sollwert, der an dem master-shaft eingestellt ist, vor. Eine Veränderung der Schwingweite beim Betrieb der Maschine kann somit an den Unwuchtwellen nachgeregelt werden.

Die GB 1 536 765 sieht ein Schwingsieb vor, bei dem eine Einstellung der Vibrationsantriebe vorgesehen ist. Diese Einstellung dient zur Optimierung der Effizienz des Siebens bzw. Fraktionierens.

Der Erfindung liegt deshalb die Aufgabe zugrunde, ein Verfahren und eine Vorrichtung zur Einstellung einer bestimmten Schüttgutmenge bzw. der Schüttguthöhe auf einer Schwingmaschine so zu verbessern, daß diese auch bei unterschiedlichen Aufgabemengen genau eingehalten wird und daß auch bei einfachster Ausgestaltung der Schwingmaschine ein langlebiger störungsfreier Betrieb gewährleistet ist.

Diese Aufgabe wird durch die in Patentanspruch 1 und Patentanspruch 4 angegebene Erfindung gelöst. Weiterbildungen und vorteilhafte Ausführungsbeispiele der Erfindung sind in den Unteransprüchen angegeben.

Aus der DE-OS 25 51 396 ist zwar ein Verfahren zur Veränderung des Winkels der resultierenden Schwingungsamplitude bekannt, bei der bei einer Schwingmaschine mit zwei Schwingantrieben ein Schwingantrieb kurzzeitig abgeschaltet wird, wodurch eine Phasendifferenz zwischen diesen beiden Unwuchtmassen entsteht. Dadurch sind verschiedene Fördergeschwindigkeiten und auch die Schwingrichtung des Schüttgutes auf der Schwingrinne zwischen zwei Grenzwerten einstellbar, das aber hauptsächlich zur Reinigung verstopfter Siebmaschen oder zur Förderung anbackenden Schüttgutes vorgesehen ist. Allerdings ist bei dieser Siebmaschine keine Regelung vorgesehen, durch die eine bestimmte Schüttguthöhe bzw. Schüttgutmenge auf der Siebfläche einstellbar wäre.

Die Erfindung hat den Vorteil, daß zur Einhaltung einer vorgebbaren Schüttgutmenge auf einer Förder- bzw. Schwingrinne die Regelung durch Veränderung der Drehphase zwischen mindestens zwei Unwuchtwellen sehr rasch möglich und dadurch eine sehr hohe Regelgüte erreichbar ist. Insbesondere ist durch eine derartige Verstellung der Phasendifferenz keine nennenswerte Beschleunigung der Unwuchtmassen erforderlich, wodurch die Regelung nicht nur schnell erfolgen kann, sondern.auch wenig Antriebsenergie erfordert. Dadurch ist insbesondere bei der Einstellung einer vorgebbaren Schüttguthöhe von zu entwässernden Sand eine gleichbleibend geringe Restfeuchte einhaltbar.

Die Erfindung hat weiterhin den Vorteil, daß durch die Verstellung des Wurfwinkels keine Veränderungen der Beschleunigungsverhältnisse an der Schwingrinne auftreten, so daß keine zusätzlichen Maschinenbelastungen konstruktiv berücksichtigt werden müssen.

Eine besondere Ausbildung der Erfindung, die zur Ermittlung der Schüttguthöhe bzw. der Schüttgutmenge eine Wägeeinrichtung verwendet, hat den Vorteil, daß damit eine sehr genaue Ermittlung des zu behandelnden Schüttgutes möglich ist, wodurch die Erfindung nicht nur zum Entfeuchten von Sand, sondern auch zur Behandlung anderer Schüttgütermengen auf einer Schwingrinne einsetzbar ist.

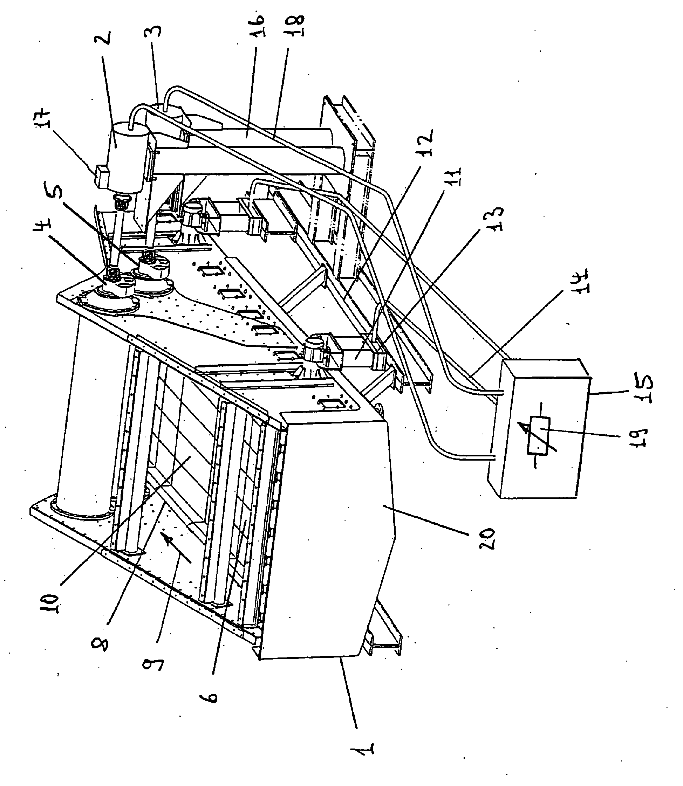

Die Erfindung wird anhand eines Ausführungsbeispiels, das in der Zeichnung dargestellt ist, näher beschrieben. Die Zeichnung zeigt eine Schwingmaschine 1 mit zwei Unwuchtwellen 4, 5, die über zwei Elektromotoren 2, 3 angetrieben werden, die mittels des Gewichtes der Siebrinne 10 in ihrer Phasenlage regelbar sind.

Die Schwingmaschine 1 ist als Siebmaschine zum Entwässern von Sand ausgebildet, bei der der Entwässerungsvorgang zwischen einer Aufgabestelle 6 und einer Abwurfstelle am Ende der Siebstrecke erfolgt. Dabei enthält die Siebmaschine 1 ein Sieb, das in einem Siebrahmen 8 angeordnet ist und in Förderrichtung 9 gegen die Horizontale leicht ansteigt. Das in dem Rahmen 8 angeordnete Sieb stellt dabei eine lineare Förderrinne 10 dar, die nach unten auch leicht gebogen ausgebildet sein kann. Die Siebmaschine 1 ist über vier Federelemente 11 gegenüber ihrem Aufstandsrahmen 12 federn gelagert. Zwischen den Federelementen 11 und dem Aufstandsrahmen 12 sind vier Wägezellen 13 als Rinnenbeladungsaufnehmer angeordnet, die über elektrische Leitungen 14 mit einer Regeleinrichtung 15 verbunden sind. Am Sieb- bzw. Schwingrahmen 8 sind oberhalb des Entwässerungssiebes 10 mindestens zwei Unwuchtwellen 4, 5 mit mindestens zwei Unwuchtgewichten angeordnet. Die Unwuchtwellen 4, 5 sind über Kreuzgelenke und Kardanwellen mit jeweils einem separaten Elektromotor 2, 3 zum Antrieb verbunden, der über Stützen 16 ortsfest gelagert und mit den Aufstandsrahmen 12 verbunden ist. Jeder der beiden Elektromotore 2, 3 besitzt einen Drehwinkelgeber 17 und ist über eine separate Verbindungsleitung 17 mit der Regeleinrichtung 15 und einer nicht dargestellten Spannungsversorgung verbunden.

Im Betriebszustand treiben die beiden Elektromotoren 2, 3 die Unwuchtwellen 4, 5 synchron gegenläufig mit einer vorgegebenen Drehzahl an und erzeugen eine gerichtete Schwingbewegung in einer durch die selbstsynchronisierende Wirkung der beiden gegenläufigen Unwuchtwellen vorgegebenen Wurfrichtung, die im wesentlichen durch die Anordnung der Unwuchtwellen 4, 5 konstruktiv vorbestimmt ist. Vorzugsweise wird ein Wurfwinkel gegenüber der Horizontalen von ca. 30° konstruktiv vorgesehen. Dabei wird durch die vorgegebene Drehzahl, den Wurfwinkel, der Schwingungsamplitude und der Siebneigung eine bestimmte lineare Förderung der aufgegebenen Schüttgüter zur Abwurfstelle erreicht. Bei der Entwässerung von Sand als Schüttgüter ist eine minimale Restfeuchte von ca. 12% nur bei einem zusammenhängenden Feststoffkuchen mit großer Schütthöhe erreichbar. Bei schwankenden Aufgabemengen der zu entwässernden Schüttgüter würde sich bei konstantem Schwingbetrieb die Schüttguthöhe verändern oder im ungünstigsten Fall der zusammenhängende Festgutkuchen auflösen. Deshalb wird die Fördergeschwindigkeit der Aufgabemenge angepaßt, so daß eine konstante vorgegebene große Schüttguthöhe gewährleistet ist.

Diese vorgegebene definierte Schüttguthöhe auf dem Entwässerungssieb 10 wird über die Rinnenbeladungsaufnehmer erfaßt, die entweder die Schüttguthöhe direkt oder die auf der Rinne befindliche Schüttgutmenge als Siebbelastung erfassen. Dabei kann die Rinnenbelastung je nach Gutbehandlung sowohl in ihrer Stückzahl oder mit dem Gewicht auf der Schwingrinne erfaßt werden. Vorzugsweise sind zur Siebbeladung Wägebalken als Wägezellen unter den Federelementen 11 vorgesehen, die das auf dem Entwässerungssieb 10 befindliche Gewicht erfassen, das bei einer kontinuierlichen Förderung mit vorgegebener Schüttguthöhe konstant ist. Bei einer verringerten Schüttgutaufgabe wird sich deshalb die Schüttguthöhe am Siebanfang verringern, was auch eine Verringerung des auf dem Sieb 10 befindlichen Gewichtes zur Folge hat. Die Erfindung hat deshalb vorgesehen, die minimale Restfeuchte dadurch zu erreichen, daß die Fördergeschwindigkeit in Abhängigkeit der Siebbeladung also der Schüttgutmenge geregelt wird, wobei eine einhaltbare Schüttgutmenge als definierte Schüttguthöhe über ein Stellglied 19 der Regeleinrichtung 15 vorgebbar ist. Durch eine direkt meßbare oder feststellbare Restfeuchte kann auch eine optimale Schüttguthöhe oder ein Siebbeladungssollgewicht bestimmt und der Regelvorrichtung 15 vorgegeben werden.

Durch die vier Wägezellen 13, die als Biegebalken ausgebildet sind, wird kontinuierlich das Istgewicht der Rinnenbeladung bzw. die Siebbeladungshöhe ermittelt und der Regelvorrichtung 15 zugeführt. Bei einer Abweichung des Istgewichts von dem vorgegebenen Sollgewicht wird in der Regeleinrichtung 15 eine Regelgröße erzeugt, die der Regelabweichung proportional ist und durch die die Fördergeschwindigkeit entsprechend veränderbar ist. Dazu schlägt die Erfindung vor, den Wurfwinkel so zu beeinflussen, daß dadurch eine entsprechende Änderung der Fördergeschwindigkeit eintritt. Durch die Änderung der Phasenwinkel zwischen den beiden Unwuchtwellen 4, 5 ändert sich der Wurfwinkel und damit die Fördergeschwindigkeit, sodaß eine sehr rasche Schüttguthöhenregelung erreichbar ist, die auch eine gleichbleibende Restfeuchte gewährleistet.

Dazu werden die aus den Drehwinkelaufnehmern 17 gelieferten Signale der Elektromotoren 2, 3 in der Regeleinrichtung 15 erfaßt und ausgewertet. Einer der beiden Antriebsmotoren 2, 3 wird dabei vorzugsweise als Referenzmotor betrieben, dessen Drehzahl und Umlaufgeschwindigkeit konstant bleibt. Gegenüber diesem Referenzmotor 2 wird die Winkellage des zweiten Antriebsmotors 3 bestimmt und dessen Winkellage durch kurzzeitiges Abbremsen oder Beschleunigen entsprechend der Regelabweichung durch die Erzeugung eines definierten Schlupfes verändert. Es ist aber auch möglich, den Wurfwinkel durch eine kurzzeitige Umlaufgeschwindigkeitsänderung in beiden Antriebsmotoren 2, 3 mit jeweils dem halben Verstellwinkel vorzunehmen, wodurch die Regelgeschwindigkeit erhöht werden kann. Dabei können die Phasenwinkel der beiden gegenläufigen Antriebsmaschinen 2, 3 auch soweit gegeneinander verschoben werden, daß die Fördergeschwindigkeit mit dem Wert 0 einstellbar ist. Dies kann erforderlich werden, wenn bei einer Zufuhrunterbrechung kein weiterer zu entfeuchtender Sand aufgegeben wird. Eine derartige Regelung hat darüber hinaus den Vorteil, daß bei einer wieder eintretenden Zufuhr die Förderung auch wieder rasch fortgesetzt werden kann, ohne daß eine Beschleunigung der Schwungmassen an den Unwuchtwellen 3, 4 erforderlich ist.

Durch die selbstsynchronisierende Wirkung der beiden gegenläufigen Unwuchtwellen 4, 5 kann die Änderung der Fördergeschwindigkeit beispielsweise auf einfache Weise lediglich durch die Erzeugung eines definierten Schlupfes zwischen den beiden Unwuchtwellen 4, 5 geregelt werden, was weder die Antriebe 2, 3 noch die Schwingmaschine 1 nennenswert belastet. Die Variierung der Phasenlage zwischen den Unwuchtwellen 4, 5 zur Verstellung des Wurfwinkels kann linear zur gewünschten Fördergeschwindigkeitsänderung erfolgen, so daß auch nur einfache Regler 15 einsetzbar sind. Die Schwingmaschine kann auch mit der doppelten Anzahl von Unwuchtwellen 4, 5 oder ein Vielfaches davon ausgestattet sein, deren Phasenlagen dann paarweise veränderbar sind, wodurch die Fördergeschwindigkeit beeinflußbar ist. Mit derartigen Schwingmaschinen 1 sind auch andere Schüttgüter förderbar, deren Schüttguthöhe bzw. deren Schüttgutmenge konstant gehalten werden muß. Dabei kann die Schüttguthöhe auch durch Taster, Ultraschallaufnehmer oder andere Rinnenbeladungsaufnehmer erfaßt werden.

## Patentansprüche

1. Verfahren zur Einstellung der Schüttgutmenge auf einer Schwingmaschine (1) mit mindestens zwei gegenläufig angetriebenen Unwuchtwellen (4, 5), wobei die Fördergeschwindigkeit in Abhängigkeit der Differenz zwischen dem aufgegebenen und abgeworfenen Schüttgut so geregelt wird, dass die Schüttgutmenge auf der Schwingmaschine (1) konstant bleibt, **dadurch gekennzeichnet, dass** die Schüttgüter auf eine sich linear bewegende Schwingmaschine (1) aufgegeben werden, die als Entwässerungssieb (10) ausgebildet ist, und mit der die Schüttgüter zur Entwässerung von einer Aufgabestelle (6) gegenüber einer Horizontalen leicht ansteigend zu einer Abwurfstelle gefördert werden, wobei in einem ersten Schritt die Schüttgutmenge (Istwert) mittels eines oder mehrerer Rinnenbeladungsaufnehmer (13) ermittelt wird, die die Maschinenbeladung in Form des Gewichtes, der Schüttguthöhe, der Einfederungsstrecke oder der Anzahl erfassen, und in einem zweiten Schritt eine vorgegebene Schüttgutmenge (Sollwert) mit der ermittelten Schüttgutmenge (Istwert) in einer Regeleinrichtung (15) verglichen wird und bei einer Regelabweichung die Fördergeschwindigkeit durch eine Verstellung des Wurfwinkels mittels entsprechender Änderung der Phasenlage zwischen den Unwuchtwellen (4, 5) geregelt wird.

2. Verfahren nach Anspruch 1, wobei zur Entwässerung von Sand oder Kies eine vorgegebene Schüttgutmenge durch die Einstellung mittels eines Stellglieds (19) einer bestimmten Schüttguthöhe (Sollwert) erfolgt, die durch ein entsprechendes Maschinengewicht oder Schüttgutgewicht auf der Schwingmaschine (1) festgelegt wird.

3. Verfahren nach Anspruch 1 oder 2, wobei durch einen Feuchtigkeitsaufnehmer die Restfeuchte ermittelt wird und die Schüttgutmenge auf dem Entwässerungssieb (10) so lange erhöht wird, bis ein minimaler Wert erreicht ist und bei dessen Erreichen die Schüttgutmenge auf dem Entwässerungssieb (10) durch eine Regelung der Fördergeschwindigkeit auf einem konstanten Wert gehalten wird.

4. Vorrichtung zur Durchführung des Verfahrens nach einem der Ansprüche 1 bis 3 mit einer Schwingmaschine (1), die mit mindestens zwei gegenläufig angetriebenen Unwuchtwellen (4, 5) ausgerüstet ist, wobei eine Regeleinrichtung (15) vorgesehen ist, die die Fördergeschwindigkeit bei vorgegebener Schüttgutmenge auf der Schwingmaschine (1) regelt, **dadurch gekennzeichnet, dass** die Schwingmaschine (1) als Entwässerungssieb (10) ausgebildet ist, und die darauf befindliche Schüttgutmenge durch an der Schwingmaschine (1) angeordnete Rinnenbeladungsaufnehmer (13), die die Beladung der Schwingmaschine (1) als Schüttguthöhe, als Schüttgutgewicht (Istwert) oder als Schüttgutanzahl erfassen, ermittelt wird, dass die Unwuchtwellen (4, 5) mit Drehwinkelgebern (17) verbunden sind, durch die der Wurfwinkel der Schüttgüter bestimmbar ist und die Regeleinrichtung (15) so ausgebildet ist, dass bei einer Abweichung der ermittelten Schüttgutmenge (Istwert) von einer vorgegebenen Schüttgutmenge (Sollwert) auf der Schwingmaschine(1) der Wurfwinkel durch ein Abbremsen oder eine Beschleunigung mindestens eines der Unwuchtwellen (4, 5) so lange verändert wird, bis die vorgegebene Schüttgutmenge (Sollwert) wieder erreicht ist.

5. Vorrichtung nach Anspruch 4, wobei das Entwässerungssieb (10) gegenüber einer Horizontalen ansteigend angeordnet ist und Auffangmittel (20) zur Ableitung des Entwässerungsanteils vorgesehen sind.

6. Vorrichtung nach Anspruch 4 oder 5, wobei die Beladungsaufnehmer (13) als Wägezellen oder Wägebalken (13) ausgebildet und die als Wägevorrichtung zusammengeschaltet sind und das Gewicht des Entwässerungssiebes (10) oder dessen Beladungsgewicht (Istwert) ermittelt.

7. Vorrichtung nach einem der Ansprüche 4 bis 6, wobei zur Schwingungserregung das Entwässerungssieb (10) mit mindestens zwei Unwuchtwellen (4, 5) ausgerüstet ist, die durch jeweils einen Elektromotor (2, 3) synchron und gegenläufig angetrieben werden und dessen Anordnung und dessen Drehphasenlage einen bestimmten Wurfwinkel der Schüttgüter in Förderrichtung (9) vorgibt.

8. Vorrichtung nach einem der Ansprüche 4 bis 7, wobei zur Änderung des Wurfwinkels und damit zur Änderung der Fördergeschwindigkeit in der Regeleinrichtung (15) programmgesteuerte elektronische Schaltungen vorgesehen sind, durch die die Elektromotoren (2, 3) entsprechend der zu regelnden Änderung des Wurfwinkels kurzzeitig gegeneinander abgebremst oder beschleunigt werden.

## Claims

1. Method for regulating the amount of bulk material on a conveyor feeder (10) of a vibratory machine (1) with at least two unbalance shafts (4,5) driven in opposite directions, the conveying speed being controlled, as a function of the difference between fed and discharged bulk material, in such a way that the amount of bulk material on the conveyor feeder (10) remains constant, **characterised in that** the bulk material is fed onto a linear conveyor feeder (10), which is designed as a dewatering or screen feeder (10) and on which the bulk material is transported for dewatering, slightly ascending with respect to the horizontal direction, from a feeding point (6) to a point of discharge, the amount of bulk material (actual value) being determined, in a first step, by means of one or several feeder load sensors (13), which acquire the feeder load in form of the weight, the bulk material height, the deflection, or the number, and, in a second step, a preset amount of bulk material (setpoint) being compared in a control unit (15) with the acquired amount of bulk material (actual value), and, in case of a deviation, the conveying speed being controlled by altering the projection angle by means of a corresponding change of the phase position of the unbalance shafts with respect to each other (4,5).

2. Method according to claim 1, in which, for the dewatering of sand or gravel, a preset amount of bulk material is achieved by setting, by means of a final control element (19), a certain bulk material height (setpoint), which is defined by a corresponding feeder weight or bulk material weight on the screen feeder (10).

3. Method according to claim 1 or 2, in which the residual moisture is determined by means of a moisture sensor and the amount of bulk material on the dewatering feeder or screen feeder (10) is increased until a minimum value is obtained, and, once obtained this minimum value, the amount of bulk material on the screen feeder (10) is kept at a constant value by a closed-loop-control of the conveying speed.

4. Device for implementing the method according to one of the claims 1 to 3 with a vibratory machine (1), which comprises a conveyor feeder (10) and is connected to at least two unbalance shafts (4, 5) driven in opposite directions, with a control unit (15) being provided, which controls the conveying speed at a preset amount of bulk material on the conveyor feeder (10), **characterised in that** the vibratory machine (1) is designed as a screening machine, the conveyor feeder of which is designed as a dewatering screen or screen feeder (10) and **in that** the amount of bulk material on the feeder is determined by feeder load sensors (13) arranged on the vibratory machine (1), which acquire the load of the conveyor feeder (10) as bulk material height, bulk material weight (actual value) or bulk material number, and **in that** the unbalance shafts (4, 5) are connected to rotary angle sensors (17), by means of which the projection angle of the bulk materials may be determined, and **in that** the control unit (15) is designed in such a way that, in case of a deviation of the determined bulk material amount (actual value) from a preset bulk material amount (setpoint) on the vibratory feeder (10), the projection angle is varied, by decelerating or accelerating at least one of the unbalance shafts (4,5), until the preset bulk material amount (setpoint) is achieved again.

5. Device according to claim 4, the dewatering feeder (10) being arranged in the vibratory machine (1) slightly ascending with respect to a horizontal line and collecting means (20) being provided for draining of the dewatering portion.

6. Device according to claim 4 or 5, in which the feeder load sensors (13) are designed as load cells or weighbeams (13) and are interconnected to constitute a weighing system determining the weight of the conveyor feeder (10) or the weight of its load (actual value).

7. Device according to one of the claims 4 to 6, in which, for the purpose of vibration excitation, the conveyor feeder (10) is connected with at least two unbalance shafts (4, 5), which are synchronously driven in opposite senses of rotation by an electric motor (2, 3) for each shaft, the location and rotary phase position of which predetermines a specific projection angle of the bulk materials in conveying direction (9).

8. Device according to one of the claims 4 to 7, in which, for the purpose of altering the projection angle and thus changing the conveying speed, program-controlled electronic circuits are provided in the control unit (15), by which the electric motors (2, 3) may be decelerated or accelerated with respect to each other for short moments, in accordance with the change to be effected by the control system.

## Revendications

1. Procédé pour régler la quantité de produit en vrac sur une machine vibrante (1), avec au moins deux arbres déséquilibrés (4, 5) entraînés à contresens, la vitesse de convoyage étant réglée en fonction de la différence entre le produit en vrac distribué et rejeté, de façon à ce que la quantité de produit en vrac reste constante sur la machine vibrante (1), **caractérisé en ce que** les produits en vrac sont distribués sur une machine vibrante (1) se déplaçant de façon linéaire, qui est conçue en tant que tamis déschlammeur (10) et par laquelle les produits en vrac sont convoyés pour la déshydratation, d'une zone de distribution (6) en pente légèrement ascendante par rapport à une horizontale vers une zone de rejet, dans une première étape, la quantité de produit en vrac (valeur réelle) étant déterminée au moyen d'un ou de plusieurs enregistreurs du chargement de la goulotte (13) qui détectent le chargement de la machine sous forme du poids, de la hauteur du produit en vrac, du trajet de débattement ou de la quantité, et dans une deuxième étape, une quantité prédéfinie de produit en vrac (valeur de consigne) étant comparée avec le quantité déterminée de produit en vrac (valeur réelle) dans un dispositif de réglage (15) et en cas d'écart de réglage (15), la vitesse de convoyage étant réglée par un ajustement de l'angle de projection au moyen d'une variation correspondante de la position de phase entre les arbres déséquilibrés (4, 5).

2. Procédé selon la revendication 1, pour la déshydratation de sable ou de gravier, une quantité prédéfinie de produit en vrac étant assurée par réglage au moyen d'un actionneur (19) d'une certaine hauteur de produit en vrac (valeur de consigne), qui est déterminée par un poids correspondant de la machine ou par un poids correspondant du produit en vrac sur la machine vibrante (1).

3. Procédé selon la revendication 1 ou 2, l'humidité résiduelle étant déterminée par un enregistreur d'humidité et la quantité de produit en vrac sur le tamis déschlammeur (10) étant augmentée jusqu'à l'atteinte d'une valeur minimale et à l'atteinte de cette dernière, la quantité de produit en vrac sur le tamis déschlammeur (10) étant maintenue à une valeur constante par un réglage de la vitesse de convoyage.

4. Dispositif pour la réalisation du procédé selon l'une quelconque des revendications 1 à 3, avec une machine vibrante (1) qui est équipée d'au moins deux arbres déséquilibrés (4, 5) entraînés à contresens, un dispositif de réglage (15) étant prévu qui règle la vitesse de convoyage pour une quantité de produit en vrac prédéfinie sur la machine vibrante (1), **caractérisé en ce que** le machine vibrante (1) est conçue en tant que tamis déschlammeur (10) et la quantité de produit en vrac se situant sur cette dernière est déterminée par des enregistreurs du chargement de la goulotte (13), disposés sur la machine vibrante (1) qui détectent le chargement de la machine sous forme de hauteur du produit en vrac, du poids du produit en vrac (valeur réelle) ou sous la forme de quantité de produit en vrac, **en ce que** les arbres déséquilibrés (4, 5) sont reliés avec des capteurs angulaires de rotation (17), à l'aide desquels l'angle de projection du produit en vrac peut être défini et **en ce que** le dispositif de réglage (15) est conçu de façon telle que lors d'un écart entre la quantité de produit en vrac déterminée (valeur réelle) et une quantité de produit en vrac prédéfinie (valeur de consigne) sur la machine vibrante (1), l'angle de projection soit varié par un freinage ou par une accélération d'au moins l'un des arbres déséquilibrés (4, 5) jusqu'à ce que la quantité prédéfinie de produit en vrac (valeur de consigne) soit de nouveau atteinte.

5. Dispositif selon la revendication 4, le tamis déschlammeur (10) étant disposé de façon ascendante par rapport à une horizontale et des moyens collecteurs (20) étant prévus pour évacuer la fraction de déshydratation.

6. Dispositif selon l'une quelconque des revendications 4 ou 5, les enregistreurs de chargement (13) étant conçus sous la forme de cabines de balances ou de barres de pesage (13) et étant interconnectés en tant que dispositif de pesage et déterminant le poids du tamis déschlammeur (10) ou son poids de chargement (valeur réelle).

7. Dispositif selon l'une quelconque des revendications 4 à 6, pour l'excitation des vibrations, le tamis déschlammeur (10) étant équipé d'au moins deux arbres déséquilibrés (4, 5), qui sont entraînés par chacun un moteur électrique (2, 3), de façon synchrone et à contresens et dont la disposition et la position de la phase de rotation prédéfinit un certain angle de projection des produits en vrac dans le sens de convoyage (9).

8. Dispositif selon l'une quelconque des revendications 4 à 7, pour la variation de l'angle de projection et donc pour la variation de la vitesse de convoyage, des circuits électroniques commandés par programme, au moyen desquels les moteurs électriques (2, 3) sont brièvement freinés ou accélérés l'un par rapport à l'autre, en fonction de la variation à régler étant prévus dans le dispositif de réglage (15).
